# EUROPÄISCHE PATENTSCHRIFT

(11) **EP 0 529 381 B1**
(45) Veröffentlichungstag und Bekanntmachung des Hinweises auf die Patenterteilung: **06.03.1996**
(21) Anmeldenummer: 92113555.4
(22) Anmeldetag: 08.08.1992
(51) Int. Cl.: A01B 69/00, A01B 73/00, A01D 75/28, A01D 33/00

(54) **Achszuordnung zum Maschinenrahmen für aufgesattelte Hackfruchterntemaschinen**
Axle mounting on the frame of a root crop harvester
Montage de l'essieu sur le chassis d'une machine de récolte de tubercules

(30) Priorität: 22.08.1991 DE 4127904; 19.06.1992 DE 4220053
(43) Veröffentlichungstag der Anmeldung: 03.03.1993
(73) Patentinhaber: Weimar-Werk Maschinenbau GmbH, D-99427 Weimar (DE)
(72) Erfinder: Dannehl, Roland, 0-5300 Weimar (DE); Johne, Hans, 0-5300 Weimar (DE); Kricheldorf, Armin, 0-5300 Weimar (DE); Pudenz, Volker, 0-5300 Weimar (DE)
(74) Vertreter: Pfeiffer, Rolf-Gerd

(56) Entgegenhaltungen:
- DE-A- 1 457 923
- DE-A- 2 912 809
- DE-C- 828 936
- FR-A- 1 563 323

## Beschreibung

Die Erfindung betrifft eine verstellbare Zuordnung einer Achse zum Maschinenrahmen für aufgesattelte Hackfruchterntemaschinen, insbesondere mehrreihige Kartoffelerntemaschinen mit konstanter Spurweite.

Solche Vorrichtungen sind aus der DD-A-0 154 053, DD-A-0 256 069 und DD-A-0 55 468 bekennt.

Aus den Patentschriften DD 0 154 053 und DD 0 256 069 sind spurverstellbare Maschinenrahmen für aufgesattelte Hackfruchterntemaschinen bekannt geworden, bei denen die Spurveränderung durch ein Versetzen der Räder erfolgt. Dieser Verstellvorgang kann mittels Zwischenflanschstücken, verstellbaren Achsstummeln oder klappbaren Achsauslegern vorgenommen werden.
Zum Zwecke des Ausgleichs von Hangneigungen sind desweiteren nach DD 0 55 468 Maschinenachsen bekannt, bei denen der quer zur Fahrtrichtung unter der Maschine angeordnete Achsträger pendelnd gelagert ist und über eine Stelleinrichtung geschwenkt wird.

Der Verstellaufwand der Achsen von Transport- in Arbeitsstellung ist mit erheblichem Zeitaufwand verbunden und zu arbeitsintensiv. In der Beseitigung dieses Mißstandes liegt die Aufgabe der Erfindung. Ferner liegt die Aufgabe der Erfindung darin, mittels einer verstellbaren Achszuordnung insbesondere eine gezogene mehrreihige Erntemaschine zu schaffen. Die Aufgabe wird durch die kennzeichnenden Merkmale der Patentansprüche gelöst. Es wird gemäß der Erfindung eine Achszuordnung zum Maschinenrahmen geschaffen, mittels der eine lenkbare Achse mit konstanter Spurweite derart mit dem Rahmen einer Hackfruchterntemaschine verbunden ist, daß für die Arbeit auf dem Feld und für den Transport auf der Straße die notwendigen Radstellungen erreicht werden und zusätzlich beim Roden im hängigen Gelände eine Hangverstellung durchführbar ist, indem der Maschinenrahmen dreh- und verschiebbar mit dem Achsträger in Verbindung steht. Durch die Erfindung wird die gesetzlich zulässige maximale Straßentransportbreite, insbesondere mehrreihiger Erntemaschinen eingehalten.
Die durch die Erfindung erreichten Vorteile sind im wesentlichen darin zu sehen, daß durch die Verschiebung des Maschinenrahmens auf der Achse die notwendig günstige Lage des Maschinenschwerpunktes in Arbeitsstellung und eine solche Radstellung zur Gesamtmaschine erreicht wird, daß ein Rad immer im gerodeten Bereich des Feldes und das zweite nur beim Anroden zwischen zwei Dämmen läuft. Beim Seitenzug der Erntemaschine entstehen durch das Versetzen der Achse geringere Seitenkräfte. Infolge der Zuordnungsveränderung der Achse zur Gesamtmaschine läßt sich ohne zusätzlichen Arbeitsaufwand eine Transportbreite der Maschine unter drei Metern erreichen und zusätzlich kann eine Hangverstellung vorgenommen werden.

Die Erfindung soll anhand zweier Ausführungsbeispiele näher erläutert werden. Dabei zeigen:
- Fig. 1: eine Vorderansicht erfindungsgemäßer Achse mit Verbindungselementen zum Hauptrahmen,
- Fig. 2: eine Schnittdarstellung durch den Achsträger gemäß Fig. 1
- Fig. 3: eine weitere Ausführungsform erfindungsgemäßer Achse in Vorderansicht und
- Fig. 4: eine Schnittdarstellung durch den Achsträger gemäß Fig. 3.

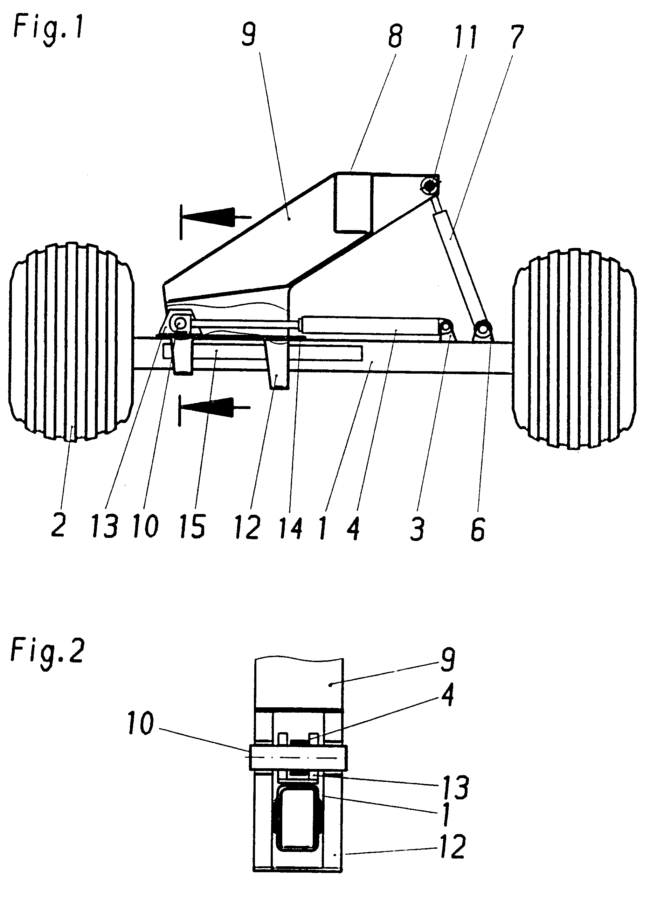

In Fig. 1 und 2 wird eine Ausführungsmöglichkeit der Erfindung beschrieben, bei der ein Verstellzylinder 4 an einen Bolzen 10 über ein den Bolzen umfassendes Schiebestück 13 angelenkt ist. Dabei gleitet das Verschiebestück bei relativer Achsverstellung auf einer Gleitschiene 14 und die Führungsgabel 12 ist durch eine weitere Gleitschiene 15 gegen den Achsträger 1 abgestützt. Eine Hangverstellung wird bei dieser Ausführung durch Veränderung eines als Kolbenzylinder ausgelegten längenverstellbaren Kopplungsgliedes 7 zwischen den Kopplungspunkten 11 und 6 bewirkt.

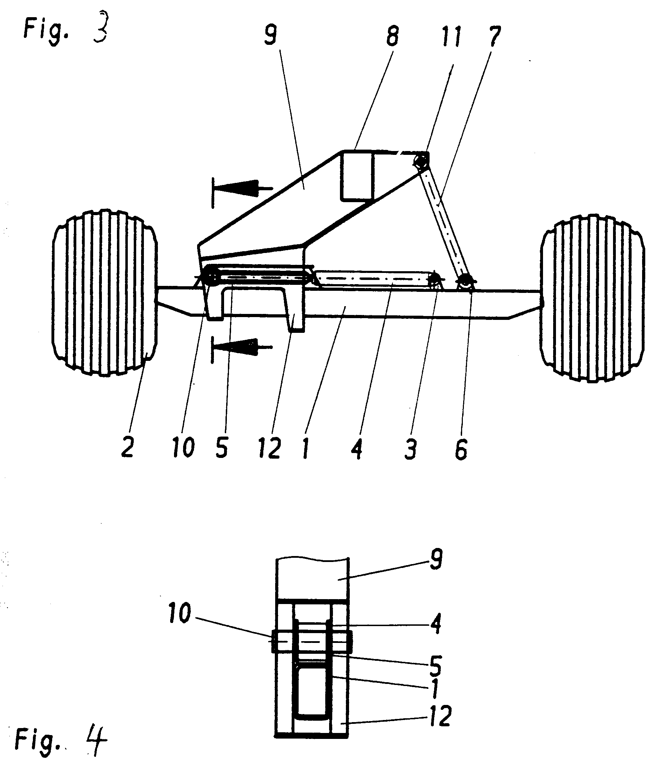

In Fig. 3 und 4 ist ein Achsträger 1 dargestellt, an dem die lenkbaren Räder 2 angeordnet sind und sich eine Lagerung 3 für einen Verstellzylinder 4, eine Langlochführung 5 und ein Kopplungspunkt 6 für das Koppelglied 7 befinden.
Der Hauptträger 8 des Maschinenrahmens der Erntemaschine ist mit einem Ausleger 9 mit dem Verstellzylinder 4 und der Langlochführung 5 durch einen Bolzen 10 mit dem Achsträger 1 sowie über einen zweiten Kopplungspunkt 11 mit dem angelenkten Koppelglied 7 verbunden. Zur Aufnahme von Zugkräften zwischen dem Hauptträger 8 und dem Achsträger 1 besitzt der Ausleger 9 eine Führungsgabel 12; die über den Achsträger 1 greift, zur Übertragung der Kräfte dient und gleichzeitig die Kolbenstange des Verstellzylinders 4 schützt. Wird gemäß der Erfindung der Verstellzylinder 4 betätigt, schwenkt der Hauptträger 8 um den ersten Kopplungspunkt 6 auf dem Achsträger 1. Die beiden Endlagen des Verstellzylinders 4 entsprechen dabei der benötigten Arbeits- und Transportstellung des Maschinenrahmens zur Achse. Mittels einer Regeleinrichtung kann über das verstellbare Koppelglied 7 und den Bolzen 10 der Achsträger 1 eine Neigungsänderung des Maschinenrahmens erfahren, so daß ein Hangausgleich der Maschine gegeben ist.

## Patentansprüche

1. Vorrichtung, bestehend aus einem Maschinenrahmen (8) und einem Achsträger (1), für aufgesattelte und im Seitenzug arbeitende Hackfruchterntemaschinen zur Verstellung des Maschinenrahmens in eine Transport- und eine Arbeitsstellung, dadurch gekennzeichnet, daß ein, eine Schwenkbewegung ermöglichender Anlenkpunkt (10) des Maschinenrahmens (8) über ein Verstellmittel (4) geradlinig und parallel zum Achsträger (1) verschiebbbar angeordnet ist, und ein zweiter Kopplungspunkt (11) des Maschinenrahmens (8) über ein Kopplungsglied (7) um einen ersten Kopplungspunkt (6) am Achsträger (1) schwenkbar angeordnet ist.

2. Vorrichtung nach Anspruch 1, dadurch gekennzeichnet, daß an dem Achsträger (1) ein in einer Lagerung (3) mit einer Führungsgabel (12) in Verbindung stehender Verstellzylinder (4) befestigt ist, dessen Anlenkung an einem Anlenkpunkt (10) über ein den Anlenkpunkt (10) umfassendes Schiebestück (13) erfolgt, welches auf einer Gleitschiene (14) verschiebbar gelagert ist und die Anlenkung von den Kopplungspunkten (11, 6) über ein längenverstellbares Kopplungsglied (7) erfolgt.

3. Vorrichtung nach Anspruch 1 und 2, dadurch gekennzeichnet, daß der Achsträger (1) beidseitig über die Verstellänge der Führungsgabel (12) mit mindestens einer Gleitschiene (15) versehen ist.

4. Vorrichtung nach Anspruch 1 und 2, dadurch gekennzeichnet, daß der Maschinenrahmen (8) um den Anlenkpunkt (10) durch eine Längenveränderung des Kopplungsgliedes (7) zwischen den Anlenkpunkten (6, 11) zumindest in Arbeitsstellung zusätzlich schwenkbar ist.

## Claims

1. Device for articulated laterally pulled root crop harvester comprising a machine frame (8) and an axle mounting (1) permitting change-over of the machine frame from a transport position into a working position and vice versa, characterized in that a pivotal point (10) on the machine frame (8) enabling swiveling is arranged for displacement in straight line and in parallel to the axle mounting (1) via a displacement means (4), and in that a second pivotal point (11) of the machine frame (8) is arranged for pivoting about a first pivotal point (6) on the axle mounting (1) via a coupling member (7).

2. Device as claimed in claim 1, wherein a displacement cylinder (4) is secured to the axle mounting (1) via a seating (3) and being in operative connection to a fork guide (12), said displacement cylinder (4) being pivotally connected at a pivotal point (10) via a displacement member (13) enclosing said pivotal point (10) and being seated for displacement on a slide bar (14), the pivotal connection of the pivotal points (11 and 6) is achieved via a longitudinal displaceable coupling member (7)

3. Device as claimed in claim 1 and 2, wherein both sides of the axle mount (1) are provided with at least one sliding bar (15) along the displacement length of the fork guide (12).

4. Device as claimed in claim 1 and 2, wherein the machine frame (8), at least in working position, additionally permits swiveling about the pivotal point (10) due to a longitudinal displacement of the coupling member (7) between the pivotal points (6, 11).

## Revendications

1. Dispositif composé d'un châssis (8) et d'un porteur d'essieu (1), pour des machines semi-portées de récolte de tubercules travaillant en traction latérale; le dispositif sert à déplacer le châssis vers une position de transport et une position de travail; le dispositif est caractérisé par le fait qu'un point d'articulation (10) du châssis (8) - permettant d'effectuer un mouvement pivotant - est placé de façon amovible, via un moyen de déplacement (4), en ligne droite et parallèlement au porteur d'essieu (1); en outre, le dispositif est caractérisé par le fait qu'un deuxième point de couplage (11) du châssis (8) est placé de façon pivotante autour d'un premier point de couplage (6) sur le porteur d'essieu (1) via un élément de couplage (7).

2. Dispositif conforme à la spécification 1, caractérisé par le fait qu'un cylindre ajustable (4) est fixé au porteur d'essieu (1), cylindre lié à une fourche de guidage (12) dans un palier (3); l'articulation du cylindre à un point d'articulation (10) s'effectue via une pièce coulissante (13) entourant le point d'articulation (10); la pièce coulissante est logée de façon déplaçable sur une glissière (14); l'articulation des points de couplage (11, 6) s'effectue via un élément de couplage réglable en longueur (7).

3. Dispositif conforme aux spécifications 1 et 2, caractérisé par le fait que le porteur d'essieu (1) est équipé - bilatéralement sur la longueur de réglage de la fourche de guidage (12) - d'au moins une glissière (15).

4. Dispositif conforme aux spécifications 1 et 2, caractérisé par le fait que le châssis (8) peut, du moins en position de travail, pivoter en outre autour du point d'articulation (10) via une modification de la longueur de l'élément de couplage (7) entre les points d'articulation (6, 11).
